# EUROPEAN PATENT SPECIFICATION

(11) **EP 3 151 514 B1**
(45) Date of publication and mention of the grant of the patent: **04.11.2020**
(21) Application number: 15187340.3
(22) Date of filing: 29.09.2015
(51) Int. Cl.: H04L 29/08, H04L 29/06

(54) **A METHOD IN A CLIENT-SERVER NETWORK AND CLIENT-SERVER NETWORK**
VERFAHREN IN EINEM CLIENT-SERVER-NETZWERK UND CLIENT-SERVER-NETZWERK
PROCÉDÉ DANS UN RÉSEAU CLIENT-SERVEUR ET UN TEL RÉSEAU

(43) Date of publication of application: 05.04.2017
(73) Proprietor: Meetrics GmbH, 10178 Berlin (DE)
(72) Inventor: SCHUMACHER, Hendrik, 12683 Berlin (DE)
(74) Representative: Bittner, Thomas L.

(56) References cited:
- WO-A1-2009/109628
- US-A1- 2011 055 021
- US-A1- 2013 346 488
- MIKA AYENSON ET AL: "Flash Cookies and Privacy II: Now with HTML5 and ETag Respawning", SSRN ELECTRONIC JOURNAL, 1 January 2011 (2011-01-01), XP055250766, DOI: 10.2139/ssrn.1898390

## Description

The present disclosure refers to a method in a client-server network and a client-server network.

### Background

In a client-server network at least one client and a plurality of servers is provided which may be connected for wired and / or wireless data communication. As an example for a client server network it may be referred to the World Wide Web (Internet).

Document US 2007 / 0124480 A1 refers to a system and method for persistent user tracking including associating a session management item with a client computer identification item, wherein said session management item and said client computer identification item are both associated with a single value of a marker. Embodiments of the present invention include a system, device, and method for persistent user tracking including, associating a first session management item, the first session management item pertaining to a session conducted by a user on a first server with a client computer identification item, and associating a second session management item, the second session management item pertaining to a session conducted by the user on a second server with the client computer identification item. In some embodiments, the client computer identification item may be received from a client computer by a code executed thereon.

According to the disclosure in US 2007 / 0124480 A1, compulsory client tracking may be used, for example, for security measures to prevent fraudulent users from averting detection. One such compulsory persistent user tracking system uses a method referred to as "cache tagging", as described in HTTP://sourcefrog.netiprojects/ meantime/, ("meantime-non-consensual HTTP user tracking using caches" by Martin Pool, published in the year 2000). Cache tagging systems may use client-end cacheable resources for tracking client processes rather than for their intended purpose. If a client sends a request to a specific domain provided by a server, the server may associate or attach a client specific tag to the client side cached request. In future client requests to the same domain, the server may identify the tagged client request and retrieve a string of client side cached resources, headers, or values associated therewith, spanning from the initial tagged client request to the present client request. For example, the server may use client side cached resources such as "Entity tag" and "Last-Modified" headers, to store persistent tracking data, to validate the integrity of a cached resource copy, or any other suitable function.

Document WO 2009/109628 A1 discloses a method of tracking usage of a client computer. The method can include: receiving a first request for a first file from the client computer; assigning first identifying information to the client computer, the first identifying information is associated with the client computer; providing the first file with a first header to the client computer, the first header comprises the first identifying information; receiving a first conditional request for the first file from the client computer, the first conditional request comprises second identifying information; accessing first data about the client computer using the second identifying information after receiving the first conditional request if the first identifying information is the same as the second identifying information; and instructing the client computer to display at least one second file after receiving the first conditional request if the first identifying information is the same as the second identifying information. Other embodiments are disclosed in the document.

In document US 2011/055021 A1, a system and method for determining a commission for an affiliate referral is described. Typically, affiliate tracking programs utilize a cookie deposited on an end user's computer to collect the data it needs to accurately associate a commission with an affiliate. If the cookie is lost for some reason (e.g. the user deletes cookies), that valuable information is missing, and the system must collect other information to determine the possible source of the referral. Two additional data collection and association pathways may be utilized to ensure that the commissions paid to affiliates are complete and accurate. These additional pathways include eTags and a caching system which enable cookieless tracking techniques. In addition a conversion breakdown report provides the data collection and user interface for an affiliate manager to determine in some circumstance to whom, among several possible affiliates, the commission should be given.

Document XP055250766 (Ayenson et al., Flash Cookies and Privacy II: Now with HTML 5 and ETag Respawning, SSRN Electronic Journal, DOI: 10.2139/ssrn.1898390, 2011) describes the usage of different tracking mechanisms on popular websites.

Document US 20113/346488 A1 discloses a stub tag in source code of a webpage that allows for collection of numerous data elements according to tracking tags of various data receiver parties and for distribution of the collected data elements to those parties. The stub tag references a remotely cached script that enables a user device, e.g. a computer running a web browser, to retrieve a tag code for collecting the data elements. The tag code is constructed according to data collection settings, data distribution settings, data receiver settings, and/or user privacy settings. The tag code results in a single variable, common to all data receiver parties, for each data element. The common variable is transmitted to data receivers through the user device or through a server-to-server API.

### Summary

It is object of the present disclosure to provide a method in a client-server network and a client-server network which provide for improved technologies offering wider client tracking capabilities.

The object is achieved by the present invention as defined in the appended claims. More specifically, a method in the client-server network according to claim 1 is provided. Further, a client-server network according to claim 4 is provided. Further embodiments are disclosed in the dependent claims.

The aspects, features and terminology described below are provided in view of the invention.

A method in a client-server network is provided. The method comprises generating, in a client, a setting request for setting an entity tag in a server of the client server-network. The setting is received in the server. In the server, the entity tag is generated, the generating comprising providing a user identification in the server and including the user identification in the entity tag. In the server a response to the setting request is generated. The response to the setting request comprises the entity tag provided in an entity tag field of the response. For example, the entity tag field may be provided in a header of the response. The response generated in the server is received by the client. The client is caching the entity tag which is derived from the response received, e.g. by parsing the response, for example, the header of the response in the client. In the client, a content request for retrieval of content provided in a resource identified by a resource locator, for example a unified resource locater (URL), in the client-server network. For example, a webpage may be requested for retrieval by the content request. In the client-server network there may be a plurality of resources for content, for example, a plurality of webpages. The generating of the content request comprises including the resource locator and the entity tag in the content request. The content request generated in the client is transmitted from the client to the resource identified by the resource locator. The providing of the user identification further comprises generating the user identification in response to receiving user input data indicative of user identity information in at least one of the client, and the server.

Further, a client-server network is provided, the client-server network comprising a client configured to generate a setting request for setting an entity tag, and a server. The server is configured to receive the setting request, and to generate the entity tag, the generating comprising providing a user identification in the server and including the user identification in the entity tag. Also, the server is configured to generate a response to the setting request received, the response comprising the entity tag provided in an entity tag field of the response. The client of the client-server network is further configured to receive the response from the server, and cache the entity tag in the client. For example, a cache memory of the client may be used for caching the entity tag. Further, the client is configured to generate a content request for retrieval of content, for example, a webpage, provided in a resource identified by a resource locator in the client-server network. The generating comprises including the resource locator and the entity tag in the content request. The client is further configured to transmit the content request to the resource. The providing of the user identification further comprises generating the user identification in response to receiving user input data indicative of user identity information in at least one of the client, and the server.

In response to the transmission of the content request to the resource, the content identified by the resource locator, for example, a web webpage may be provided from the resource located in one of the servers of the client-server-network to the client. In the client, the content may be outputted over a display device to present the content requested to a user.

Steps of the different embodiments may be performed as part of a browser application running on the client.

The entity tag may also be referred to as ETag.

For the data exchange between the elements or entities (client(s), server(s)) of the client-server network the HTTP protocol may be applied. Therefore, at least one of the setting request and the content request may be generated as a HTTP request.

The setting request generated in the client and transmitted to the server may be a non-content retrieval request. Such non-content retrieval request is distinguished from the content request for retrieval of content by not requesting any retrieval of content.

The setting request, the response to the setting request, and / or the content request may comprise scripting elements to be executed on the receiving entity, namely the client or the server. For example, Java scripting elements may be provided.

After the entity tag has been set according to the technologies described, with regard to the mechanism for indicating change of content in the World Wide Web, handling of the entity tag may be as known as such. The entity tag as such is part of the HTTP protocol. It provides for a mechanism for cache validation in the World Wide Web. For example, it allows a client to make a conditional request. The entity tag may be an opaque identifier to a specific version of content provided in a resource identified by a resource locator, specifically, a unified resource locator (URL). If the content in the resource at the resource locator ever changes, a new and different entity tag is assigned. With the technologies according to the present disclosure the new entity tag will include the user identification also.

The providing of the user identification may further comprise generating the user identification in the server. With regard to this or other embodiments, in general, the user identification may be an alpha numeric code individualizing the user in the client-server network. For example, a random code generator may generate the user identification.

The providing of the user identification may further comprise providing the user identification in the client and transmitting the user identification to the server. The user identification may be received by the client from some other entity of the client-server network, namely some other client or some server.

The providing of the user identification in the client may further comprise generating the user identification in the client.

The providing of the user identification comprises generating the user identification in response to receiving user input data indicative of user identity information in at least one of the client, and the server. In addition, the user input data may comprise a confirmation input from the user indicating that the user agrees to setting an entity tag. Such confirmation input may confirm that the user agrees to use the entity tag to be set for a method for user tracking in the client-server network. In the method it may be provided that, prior to starting user tracking based on the entity tag comprising the user identification, it is determined whether confirmation for user tracking has been received. User tracking may be denied if it is found that no user confirmation has been received in the client-server network. The user identity information may comprise at least one of the following: user name, user address, telephone number of the user, and age of the user. The user identification to be included in the entity tag may be generated in response to receiving the user identity information. Electronic information on an assignment between the user identity information and the user identification may be stored in a memory device of the client-server network, the memory device, for example, being provided in the client.

The receiving of the user input data may further comprise, in response to user input received in the client, loading one or more webpages in the client, wherein each of the one or more webpages is assigned an individual resource locator in the client-server network. For example, the process of requesting and receiving user input data may include loading one or more webpages in the client in response to the users input. The webpages loaded are identified by a resource locator in the client-server network.

The generating of the setting request for setting the entity tag may comprise opening an iframe in a non-visible operation mode in the client, loading a webpage in the iframe, wherein the webpage is assigned an individual resource locator in the client-server network, and transmitting the setting request to the server identified in the individual resource locator of the webpage loaded in the iframe. Because of the non-visible operation mode in the client, the iframe is not visible on a display device of the client to the user. Such non-visible operation mode may also be referred to as background operation mode, the processes performed in the background operation mode being not disclosed to the user of the client. The operation in connection with the iframe will allow for circumventing cross-domain-restrictions according to the same-origin-policy in the World Wide Web (Internet). According to such cross-domain-restrictions a webpage retrieved after some webpage retrieved before has to be from the same domain.

A domain (name) is an identification string that defines a realm of administrative autonomy, authority or control within the Internet. Domain names are formed by the rules and procedures of the Domain Name System (DNS). Any name registered in the DNS is a domain name. Domain names are used in various networking contexts and application-specific naming and addressing purposes. In general, a domain (name) represents an Internet Protocol (IP) resource, such as a personal computer used to access the Internet, a server computer hosting a webpage, or the web webpage itself or any other service communicated via the Internet.

The resource for the web webpage loaded in the iframe is determined in the client. The setting request is sent to the server identified in the individual resource locator of the web webpage. For example, an AJAX request provided in the HTTP protocol may be used for setting the entity tag. The webpage loaded in the iframe and for which the individual resource locator is determined in the client, is from a different domain than the one or more webpages loaded in the process of receiving the user identity information. The iframe may be closed in response to receiving the response from the server and caching the entity tag the client. A browser running on the client may be redirected to another webpage after closing the iframe.

The method further may comprise: generating, in the client, a delete request for deleting the entity tag setting; receiving the delete request in the server, recognizing the entity tag being set in the server; generating a response to the delete request in the server, the response comprising an non-functional entry in the entity tag field; transmitting the response from the server to the client; and caching the non-functional entry in the client. Such embodiment may be implemented for deleting the entity tag originally set by the setting request. The non-functional entry as referred to here will avoid the application of the entity tag in further content requests to be generated by and transmitted from the client after the response to the delete request has been received in the client. For example, the non-functional entry may refer to an empty entity tag field.

With regard to the client-server network the embodiments outlined above with regard to the method in the client-server network may apply accordingly.

### Description of further embodiments

Following, further aspects are disclosed by referring to Figures. In the figures show:
Fig. 1 a schematic block diagram of a client-server network, and
Fig. 2 to 4 a schematic block diagram for a method in the client-server network.

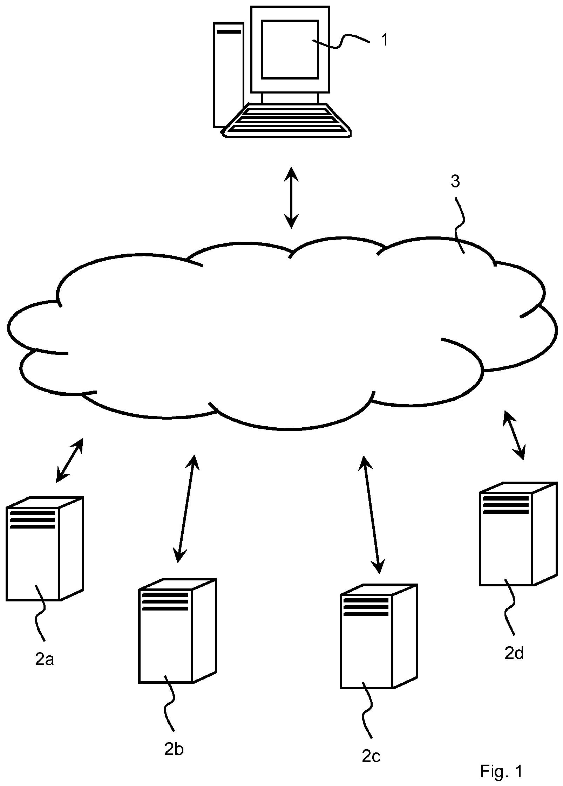

Fig. 1 shows a schematic representation of a client-server network comprising a client 1 and a plurality of servers 2a, ..., 2d. According to the embodiment shown in Fig. 1, the client 1 and the plurality of severs 2a, ..., 2d may transmit data over the world wide web 3 (Internet). The client 1 may be implemented by browser on, for example, a personal computer or a laptop computer. The browser running on the client 1 may be used by a user for retrieving content from the servers 2a,..., 2d, for example for retrieving webpages from resources provided in the plurality of servers 2a,...2d. For the data exchange in the client-server network the HTTP protocol may be applied.

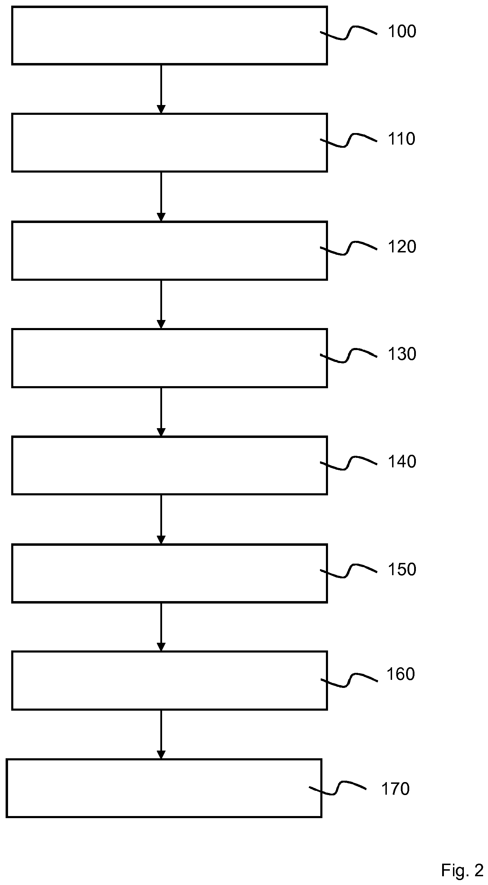

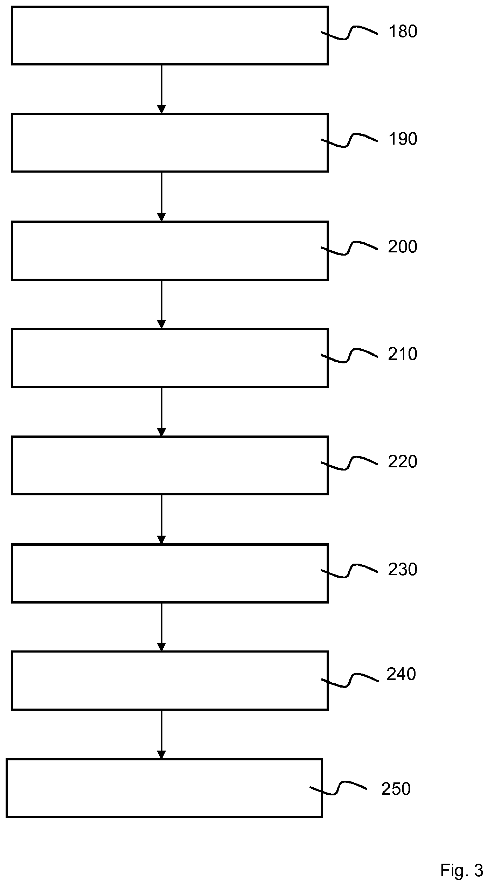

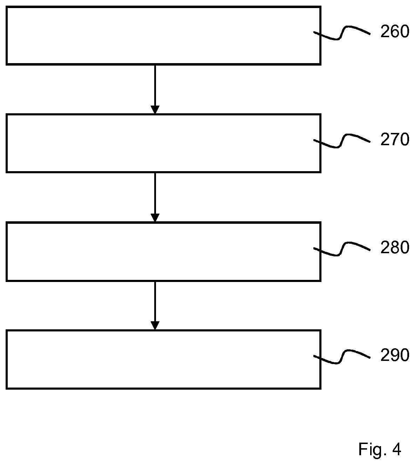

Fig. 2 to 4 show a schematic representation of a block diagram for a method in the client-server network.

In step 100, a user is going to a certain webpage to register for an online panel (The user wants to get incentives and found the webpage by clicking on an ad or searching for it). This webpage is for example running under HTTP://panel.sample.com/. The requested webpage is loaded from the server and rendered by the client. On the first webpage the user clicks on "Register as new user" (step 110). In step 120, the client is reacting to the click by requesting a second webpage from the same server (HTTP://panel.sample.com/register).

On the second webpage, in step 130, the user fills personal information into a form presented by the webpage, for example, at least one of name, address, login, password, age, gender, marital status, and household income. When this is done the user clicks on "Next". At this point, in step 140, the data filled into the form is gathered by the client and submitted to the server (POST request, e.g. to HTTP://panel.sample.com/register?step=2), and the server creates a user account and assigns a unique user identification (id), e.g. a number that is incremented for each new user (step 150). In step 160, this new id is passed as a parameter, for example as part of the URL, to a third webpage which the user is redirected to.

The third webpage (HTTP://panel.sample.com/register?step=3&userid=1234567) is loaded that shows the user a description of entity tag tracking (step 170). The user has to read this and then agree to being tracking with entity tag by providing a user input in the client. If the user clicks on "agree" a fourth webpage is loaded passing the new user id as a parameter (step 180), otherwise loading the fourth webpage is skipped and a fifth webpage is loaded (see below).

On the fourth webpage (HTTP://panel.sample.com/register?step=4&userid=1234567) the user is informed that entity tag is now being set on his browser. Setting the entity tag is an automatic process (e.g. loading another webpage into an invisible iframe and initiating another request inside the iframe, see below) that does not need any input from the user. The user can therefore automatically be redirected to a fifth webpage when the process of loading the iframe and initiating another request has completed (step 190).

When serving the fourth webpage the server stores the information that the user has agreed to be tracked by entity tag.

When the fourth webpage has finished loading, a javascripting script is executed that parses the id of the user out of the webpage URL and loads another webpage into an invisible iframe (step 200). The webpage inside the iframe could be HTTP://entity tag.sample.com/iframe?userid=1234567. The javascript does not have any output that is shown to the user on the screen. The iframe is made invisible to the user by specifying an invisible layout so the user does not see anything on the webpage except the information described above.

According to step 210, it is proposed to load another webpage inside the iframe because the AJAX request setting the entity tag could not be done from the fourth webpage itself due to the same-origin-policy (see HTTPs://en.wikipedia.org/wiki/Same-origin_policy). Since the domain is different (fourth webpage: panel.sample.com, webpage inside iframe: entity tag.sample.com, a domain is defined as part of the URL) the iframe is used to circumvent cross-domain-restrictions according to the same-origin-policy (see HTTPs://tools.ietf.org/html/rfc6454 on how the origin of a webpage is determined). Inside the iframe another javascript is run when the webpage inside the iframe has loaded. It parses the user id from the webpage URL and, in step 220, sends an AJAX request (e.g. using XMLHTTPRequest) to HTTP://entity tag.sample.com/track. This request contains the actual command to the server to set the entity tag. Since the URI HTTP://entity tag.sample.com/track has to be the same for all requests that get (read), set (write) or delete the entity tag, we need a way to tell the actual command to be executed to the server. To achieve this, an HTTP setting request header like "X Meetrics Entity tag Mode: set=1234567" is set on the AJAX request. The AJAX setting request is needed since setting an HTTP request header in a client is only possible for AJAX requests.

In step 230, the server receives the setting request and looks for the header named "XMeetricsEntity tagMode". The server looks at the value of this header and retrieves the information that the command is "set" and the entity tag id to be written is "1234567".

In reaction to the "set"-command (setting request), in step 240, the server returns a response containing "window.entity tagid='1234567';" to the client. In the response, the server sets a response header like "Entity tag: 1234567" (optionally the entity tag could contain more information like the current time when setting the entity tag, a version string etc). The response content "window.entity tagid='1234567';" is actual javascript executed by the client.

When the client executes this javascript in step 250, a variable called window.entity tagid is initialized with a value of '1234567' in the client. This javascript variable can be used by other javascript applications inside a webpage to determine the entity tag id value of the current user. In order for the javascript to be executed the Content-Type of the response received in the client has to be set to "text/javascript".

When the browser running on the client receives this response it stores the response content and the entity tag inside the browser cache (step 260). When the AJAX request has completed, in step 270, the javascript inside the iframe sends a message to the javascript on the fourth webpage that the process of setting the entity tag has been finished. The javascript on the fourth webpage then automatically tells the client to load the fifth webpage (step 280).

In step 290, on the fifth webpage (HTTP://panel.sample.com/register?step=5) a summary is shown and the user is thanked for participating in the panel.

The user may also be asked to log into the webpage from time to time to refresh the entity tag. Refreshing may be done similar to the initial setting of the entity tag. The entity may be set again in case the user cleared his browser cache (and thus removed the entity tag information, see also below).

The user can also be asked to log in with all his different devices to allow cross-device-tracking. On each of the devices the entity tag is set in the client in exactly the same way. By logging into the application using the same user account the entity tag id will be the same on all the user's devices. Having a consistent user id across all devices is very valuable to allow tracking of user behavior since data gathered on one device will only offer partial behavior data.

The stored entity tag can be used very easily by just loading the URL HTTP://entity tag.sample.com/track into a webpage. For example, the stored entity tag can be used to uniquely identify the user browsing webpages across the web and gathering user profiles as well as providing user details to the visited webpages. If the user has a stored entity tag comprising the user id, the javascript variable window.entity tagid will be set to the entity tag of the user. If the user has no stored entity tag nothing will happen. The response will be empty. Client applications can use the entity tag comprising the id of the user to identify users everywhere, for example, to show them customized information, content or advertisements, to filter recommendations or to track users across the internet and use the collected information in market research studies.

Following, a process of resetting the entity tag set before is described.

User is going (again) to the online panel webpage, either from time to time or instantly with one of his other devices like tablet or mobile, the webpage is still running under HTTP://panel.sample.com/. The user clicks on "Log in as existing user". The user is shown a login form, and the user inputs his credentials. When login is successful, the server directs him to the next webpage, e.g. HTTP://panel.sample.com/account?userid=1234567.

When this webpage is loaded, the server determines if the user has agreed to being tracked by entity tag. The determination may be done by checking the information on the server, for example, stored in a database, that has been stored in step 180. When serving the fourth webpage the server may store information that the user has agreed to be tracked by entity tag.

If this is the case the server directly injects the invisible iframe into the webpage. This iframe webpage could again be HTTP://entity tag.sample.com/iframe?userid=1234567. Since the domain is different the iframe is needed to circumvent cross-domain-restrictions. Inside the iframe another javascript is running. It parses the user id from the webpage URL and sends an AJAX request (eg using XMLHTTPRequest) to HTTP://entity tag.sample.com/track while setting a HTTP request header like "XMeetricsEntity tagMode: set=1234567". The server receives this request and looks for the header. Since the header is set the server returns a response containing "window.entity tagid='1234567';" and sets a response header like "Entity tag: 1234567" (optionally the Entity tag could contain more information like the current time when setting the Entity tag, a version string etc). When the browser receives this response it stores the response content and the Entity tag inside the browser cache.

Apart from the invisible iframe the third webpage could contain some information about the user account and allow updating of personal information (change password, change address, update marital status etc). Everytime this webpage is loaded the Entity tag is refreshed as detailed in step 3 if the user has agreed to entity tag tracking. In this refresh the same id of the user is always used (as determined by the server when the user logs in).

Following, a process of reading the entity tag is described.

The user normally browses the internet and goes to any webpage. On this webpage a third-party javascript is loaded from HTTP://entity tag.sample.com/script. This script could be loaded through an advertisement or because the webpage is cooperating with the panel or using some panel service as added bonus (similar to facebook "like this" feature).

The javascript injects the URL HTTP://entity tag.sample.com/track into the webpage. If the user is a panelist that wants to be tracked, the response will contain something like "window.entity tagid='1234567';" (when this URL is loaded, the browser sends a request header like "If-None-Match: 1234567" since it found the Entity tag inside the browser cache, the server looks for this header, grabs the id and builds the correct content for the response, it also sets a response header like "Entity tag: 1234567"), otherwise the response will just be empty. This script is executed by the browser and the javascript variable window.entity tagid is set to "1234567". This javascript variable can then be read by other javascripts running on the same webpage that want to use the information that the user is a known panelist (e.g. for some enhanced web analytics).

Following, a process of removing the entity tag set before is described.

User is going (again) to the online panel webpage (either from time to time or instantly with one of his other devices like tablet or mobile), the webpage is still running under HTTP://panel.sample.com/.

User clicks on "Log in as existing user". He is shown a login form and inputs his credentials. When login is successful, the server directs him to the next webpage, e.g. HTTP://panel.sample.com/account?userid=1234567.

On this webpage the user clicks on "Opt-Out of Entity tag-tracking (remove Entity tag)".

Another webpage is loaded, e.g. HTTP://panel.sample.com/optout?userid=1234567. When this webpage is loaded the server stores the information that the user does not want to be tracked anymore by entity tag (so entity tag will no longer be refreshed on the account webpage). The server also directly injects an invisible iframe into the webpage. This iframe webpage could be HTTP://entity tag.sample.com/optoutiframe?userid=1234567. Since the domain is different the iframe is needed to circumvent cross-domain-restrictions. Inside the iframe a javascript is running. It parses the id of the user from the URL of the webpage and sends an AJAX request (e.g. using XMLHTTPRequest) to HTTP://entity tag.sample.com/track while setting a HTTP request header like "XMeetricsEntity tagMode: delete". The server receives this request and looks for the header. Since the header is set the server returns an empty response "" and does not set an "entity tag" header on the response. When the browser (client) receives this response it stores the empty response content in the browser cache but does not store an entity tag anymore.

The user is then redirected back to HTTP://panel.sample.com/account?userid=1234567. On this webpage an entity tag is no longer refreshed because the server knows that the user does not want to be tracked anymore.

## Claims

1. A method in a client-server network, comprising
- rendering, by a client (1), a first webpage for registering a new user,
- receiving, at the client (1), data including personal information and/or indicative of user identity information filled into a second webpage,
- submitting the data to a server (2a, 2b, 2c, 2d),
- creating, by the server (2a, 2b, 2c, 2d), a user account,
- assigning, by the server (2a, 2b, 2c, 2d), a user identification in response to receiving the data,
- passing the user identification as a parameter to a third webpage which the user is redirected to,
- loading the third webpage that shows a description of tracking and provides a user input in the client (1) for the user to agree to the tracking,
- if the user agrees, loading a fourth webpage passing the user identification as a parameter, wherein, on the fourth webpage, the user is informed that an entity tag is set on a browser,
- generating, in the client (1), a setting request for setting the entity tag in the server (2a, 2b, 2c, 2d),
- receiving the setting request in the server (2a, 2b, 2c, 2d),
- generating the entity tag in the server (2a, 2b, 2c, 2d), the generating comprising providing the user identification in the server (2a, 2b, 2c, 2d) and including the user identification in the entity tag,
- generating a response to the setting request in the server (2a, 2b, 2c, 2d), the response comprising the entity tag provided in an entity tag field of the response,
- receiving the response in the client (1),
- caching the entity tag in the client (1),
- generating, in the client (1), a content request for retrieval of content provided in a resource in the client-server network and identified by a resource locator, the generating comprising including the resource locator and the entity tag in the content request, and
- transmitting the content request from the client (1) to the resource.

2. The method according to claim 1, wherein the generating of the setting request for setting the entity tag further comprises
- opening an iframe in a non-visible operation mode in the client (1),
- loading a webpage in the iframe, wherein the webpage is assigned an individual resource locator in the client-server network, and
- transmitting the setting request to the server (2a, 2b, 2c, 2d) identified in the individual resource locator of the webpage loaded in the iframe.

3. The method according to at least one of the preceding claims, further comprising
- generating, in the client (1), a delete request for deleting the entity tag setting,
- receiving the delete request in the server (2a, 2b, 2c, 2d),
- recognizing the entity tag being set in the server (2a, 2b, 2c, 2d),
- generating a response to the delete request in the server (2a, 2b, 2c, 2d), the response comprising an non-functional entry in the entity tag field,
- transmitting the response from the server (2a, 2b, 2c, 2d) to the client (1), and
- caching the non-functional entry in the client (1).

4. A client-server network, comprising
- a client (1) configured to generate a setting request for setting an entity tag, the client (1) being further configured to
- render a first webpage for registering a new user,
- receive data including personal information and/or indicative of user identity information filled into a second webpage,
- submit the data to a server (2a, 2b, 2c, 2d),
- load a third webpage that shows a description of tracking and provides a user input for the user to agree to the tracking,
- load a fourth webpage passing the user identification as a parameter, wherein, on the fourth webpage, the user is informed that an entity tag is set on a browser,
- generate a setting request for setting the entity tag in the server, f
- receive a response to the setting request from the server, the response comprising the entity tag provided in an entity tag field of the response,
- cache the entity tag,
- generate a content request for retrieval of content provided in a resource and identified by a resource locator in the client-server network, the generating comprising including the resource locator and the entity tag in the content request, and
- transmit the content request to the resource, and
- a server (2a, 2b, 2c, 2d) configured to
- create a user account,
- assign a user identification in response to receiving the data,
- pass the user identification as a parameter to the third webpage which the user is redirected to,
- receive the setting request,
- generate the entity tag, the generating comprising providing the user identification in the server (2a, 2b, 2c, 2d) and including the user identification in the entity tag,
- generate the response to the setting request, the response comprising the entity tag provided in an entity tag field of the response, wherein the assigning of the user identification further comprises generating the user identification in response to receiving user input data indicative of personal information or user identity information.

## Patentansprüche

1. Verfahren in einem Client-Server-Netzwerk, umfassend:
- Rendering einer ersten Webseite zum Registrieren eines neuen Benutzers durch einen Client (1),
- Empfangen von Daten beim Client (1), die persönliche Informationen enthalten und/oder Informationen zur Benutzeridentität angeben, die in eine zweite Webseite eingegeben wurden,
- Übermitteln der Daten an einen Server (2a, 2b, 2c, 2d),
- Erstellen eines Benutzerkontos durch den Server (2a, 2b, 2c, 2d),
- Zuweisen einer Benutzerkennung durch den Server (2a, 2b, 2c, 2d) als Antwort auf das Empfangen der Daten,
- Übergeben der Benutzerkennung als Parameter an eine dritte Webseite, auf die der Benutzer weitergeleitet wird,
- Laden der dritten Webseite, die eine Nachverfolgungsbeschreibung zeigt und eine Benutzereingabe im Client (1) bereitstellt, wo der Benutzer der Nachverfolgung zustimmen kann,
- wenn der Benutzer zustimmt, Laden einer vierten Webseite, wobei die Benutzerkennung als Parameter übergeben wird, wobei der Benutzer auf der vierten Webseite darüber informiert wird, dass eine Entitätskennzeichnung auf einem Browser gesetzt wird,
- Generieren einer Setzanfrage im Client (1) zum Setzen der Entitätskennzeichnung im Server (2a, 2b, 2c, 2d),
- Empfangen der Setzanfrage im Server (2a, 2b, 2c, 2d),
- Generieren der Entitätskennzeichnung im Server (2a, 2b, 2c, 2d), wobei das Generieren das Bereitstellen der Benutzerkennung im Server (2a, 2b, 2c, 2d) und das Einschließen der Benutzerkennung in der Entitätskennzeichnung umfasst,
- Generieren einer Antwort auf die Setzanfrage im Server (2a, 2b, 2c, 2d), wobei die Antwort die Entitätskennzeichnung umfasst, die in einem Entitätskennzeichnungsfeld der Antwort bereitgestellt wird,
- Empfangen der Antwort im Client (1),
- Zwischenspeichern der Entitätskennzeichnung im Client (1),
- Generieren einer Inhaltsanfrage im Client (1) zum Abrufen von Inhalt, der in einer Quelle im Client-Server-Netzwerk bereitgestellt und durch einen Ressourcenlokalisierer identifiziert wird, wobei das Generieren den Ressourcenlokalisierer und die Entitätskennzeichnung in der Inhaltsanfrage umfasst, und
- Übermitteln der Inhaltsanfrage vom Client (1) an die Ressource.

2. Verfahren nach Anspruch 1, wobei das Generieren der Setzanfrage zum Setzen der Entitätskennzeichnung ferner Folgendes umfasst:
- Öffnen eines Iframes in einem nicht sichtbaren Betriebsmodus im Client (1),
- Laden einer Webseite in dem Iframe, wobei der Webseite ein individueller Ressourcenlokalisierer im Client-Server-Netzwerk zugewiesen wird, und
- Übermitteln der Setzanfrage an den Server (2a, 2b, 2c, 2d), der im individuellen Ressourcenlokalisierer der im Iframe geladenen Webseite identifiziert wird.

3. Verfahren nach einem der vorangehenden Ansprüche, ferner Folgendes umfassend:
- Generieren einer Löschanfrage im Client (1) zum Löschen der Entitätskennzeichnungseinstellung,
- Empfangen der Löschanfrage im Server (2a, 2b, 2c, 2d),
- Erkennen der Entitätskennzeichnung, die auf dem Server eingestellt ist (2a, 2b, 2c, 2d),
- Generieren einer Antwort auf die Löschanfrage im Server (2a, 2b, 2c, 2d), wobei die Antwort einen nicht-funktionalen Eintrag im Entitätskennzeichnungsfeld umfasst,
- Übermitteln der Antwort vom Server (2a, 2b, 2c, 2d) an den Client (1), und
- Zwischenspeichern des nicht funktionierenden Eintrags im Client (1).

4. Client-Server-Netzwerk, umfassend:
- einen Client (1), der eingerichtet ist, eine Setzanfrage zum Setzen einer Entitätskennzeichnung zu generieren, wobei der Client (1) ferner eingerichtet ist:
- eine erste Webseite zum Registrieren eines neuen Benutzers zu rendern,
- Daten zu empfangen, die persönliche Informationen enthalten und/oder Informationen zur Benutzeridentität angeben, die in eine zweite Webseite eingegeben wurden,
- Daten an einen Server (2a, 2b, 2c, 2d) zu übermitteln,
- eine dritte Webseite zu laden, die eine Nachverfolgungsbeschreibung zeigt und eine Benutzereingabe bereitstellt, damit der Benutzer der Nachverfolgung zustimmen kann,
- eine vierte Webseite zu laden, die die Benutzerkennung als Parameter übergebt, wobei der Benutzer auf der vierten Webseite darüber informiert wird, dass eine Entitätskennzeichnung auf einem Browser gesetzt wird,
- eine Setzanfrage zum Setzen der Entitätskennzeichnung im Server zu generieren,
- eine Antwort auf die Setzanfrage vom Server zu empfangen, wobei die Antwort die Entitätskennzeichnung umfasst, die in einem Entitätskennzeichnungsfeld der Antwort bereitgestellt wird,
- die Entitätskennzeichnung zwischenzuspeichern,
- eine Inhaltsanfrage zum Abrufen von Inhalt zu generieren, der in einer Ressource bereitgestellt und durch einen Ressourcenlokalisierer im Client-Server-Netzwerk identifiziert wird, wobei das Generieren den Ressourcenlokalisierer und die Entitätskennzeichnung in der Inhaltsanfrage umfasst, und
- die Inhaltsanfrage an die Ressource zu übermitteln, und
- einen Server (2a, 2b, 2c, 2d), der eingerichtet ist:
- ein Benutzerkonto zu erstellen,
- eine Benutzerkennung als Antwort auf das Empfangen der Daten zuzuweisen,
- die Benutzerkennung als Parameter an die dritte Webseite zu übergeben, auf die der Benutzer weitergeleitet wird,
- die Setzanfrage zu empfangen,
- die Entitätskennzeichnung zu generieren, wobei das Generieren das Bereitstellen der Benutzerkennung im Server (2a, 2b, 2c, 2d) und das Einschließen der Benutzerkennung in der Entitätskennzeichnung umfasst,
- die Antwort auf die Setzanfrage zu generieren, wobei die Antwort die Entitätskennzeichnung umfasst, die in einem Entitätskennzeichnungsfeld der Antwort bereitgestellt wird, wobei das Zuweisen der Benutzerkennung ferner das Generieren der Benutzerkennung als Antwort auf das Empfangen von Benutzereingabedaten umfasst, die persönliche Informationen oder Benutzeridentitäts-Informationen angeben.

## Revendications

1. Procédé dans un réseau client-serveur, comprenant
- le rendu, par un client (1), d'une première page Web permettant d'enregistrer un nouvel utilisateur,
- la réception, au niveau du client (1), de données comportant des informations personnelles et/ou indiquant des informations d'identité d'utilisateur renseignées dans une deuxième page Web,
- l'envoi des données à un serveur (2a, 2b, 2c, 2d),
- la création, par le serveur (2a, 2b, 2c, 2d), d'un compte utilisateur,
- l'attribution, par le serveur (2a, 2b, 2c, 2d), d'une identification d'utilisateur en réponse à la réception des données,
- la transmission de l'identification d'utilisateur en tant que paramètre à une troisième page Web vers laquelle l'utilisateur est redirigé,
- le chargement de la troisième page Web qui présente une description du suivi et fournit une entrée utilisateur dans le client (1) pour que l'utilisateur accepte le suivi,
- le chargement d'une quatrième page Web qui transmet l'identification d'utilisateur comme paramètre si l'utilisateur accepte le suivi, l'utilisateur étant informé qu'une étiquette d'entité est définie sur un navigateur, sur la quatrième page Web,
- la génération, dans le client (1), d'une demande de paramétrage pour paramétrer l'étiquette d'entité dans le serveur (2a, 2b, 2c, 2d),
- la réception de la demande de paramétrage sur le serveur (2a, 2b, 2c, 2d),
- la génération de l'étiquette d'entité dans le serveur (2a, 2b, 2c, 2d), la génération comprenant la fourniture de l'identification d'utilisateur dans le serveur (2a, 2b, 2c, 2d) et l'inclusion de l'identification d'utilisateur dans l'étiquette d'entité,
- la génération d'une réponse à la demande de paramétrage dans le serveur (2a, 2b, 2c, 2d), la réponse comprenant l'étiquette d'entité fournie dans un champ d'étiquette d'entité de la réponse,
- la réception de la réponse dans le client (1),
- la mise en cache de l'étiquette d'entité dans le client (1),
- la génération, dans le client (1), d'une demande de contenu pour la récupération de contenu fourni dans une ressource dans le réseau client-serveur et identifié par un localisateur de ressources, la génération comportant l'inclusion du localisateur de ressources et de l'étiquette d'entité dans le demande de contenu, et
- la transmission de la demande de contenu provenant du client (1) à la ressource.

2. Procédé selon la revendication 1, dans lequel la génération de la demande de paramétrage pour paramétrer l'étiquette d'entité comprend en outre
- l'ouverture d'une iframe en mode de fonctionnement non visible dans le client (1),
- le chargement d'une page Web dans l'iframe, la page Web se voyant attribuer un localisateur de ressources individuel dans le réseau client-serveur, et
- la transmission de la demande de paramétrage au serveur (2a, 2b, 2c, 2d) identifié dans le localisateur de ressources individuel de la page web chargée dans l'iframe.

3. Procédé selon au moins l'une des revendications précédentes, comprenant en outre
- la génération, dans le client (1), d'une demande de suppression pour supprimer le paramétrage d'étiquette d'entité,
- la réception de la demande de suppression par le serveur (2a, 2b, 2c, 2d),
- la reconnaissance de l'étiquette d'entité paramétrée dans le serveur (2a, 2b, 2c, 2d),
- la génération d'une réponse à la demande de suppression dans le serveur (2a, 2b, 2c, 2d), la réponse comprenant une entrée non fonctionnelle dans le champ d'étiquette d'entité,
- la transmission de la réponse provenant du serveur (2a, 2b, 2c, 2d) au client (1), et
- la mise en cache de l'entrée non fonctionnelle dans le client (1).

4. Réseau client-serveur, comprenant
- un client (1) configuré pour générer une demande de paramétrage pour paramétrer une étiquette d'entité, le client (1) étant en outre configuré pour
- rendre une première page Web permettant d'enregistrer un nouvel utilisateur,
- recevoir des données, notamment des informations personnelles et/ou indiquant des informations d'identité d'utilisateur renseignées dans une deuxième page Web,
- envoyer les données à un serveur (2a, 2b, 2c, 2d),
- charger une troisième page Web qui présente une description du suivi et fournit une entrée utilisateur pour que l'utilisateur accepte le suivi,
- charger une quatrième page Web en transmettant l'identification d'utilisateur comme paramètre, sur la quatrième page Web, l'utilisateur étant informé qu'une étiquette d'entité est définie sur un navigateur
- générer une demande de paramétrage pour paramétrer l'étiquette d'entité dans le serveur,
- recevoir une réponse à la demande de paramétrage du serveur, la réponse comprenant l'étiquette d'entité fournie dans un champ d'étiquette d'entité de la réponse,
- mettre en cache l'étiquette d'entité,
- générer une demande de contenu pour la récupération de contenu fourni dans une ressource et identifié par un localisateur de ressources dans le réseau client-serveur, la génération comprenant l'inclusion du localisateur de ressources et de l'étiquette d'entité dans la demande de contenu, et
- transmettre la demande de contenu à la ressource, et
- un serveur (2a, 2b, 2c, 2d) configuré pour
- créer un compte utilisateur,
- attribuer une identification d'utilisateur en réponse à la réception des données,
- transmettre l'identification d'utilisateur comme paramètre à la troisième page Web vers laquelle l'utilisateur est redirigé,
- recevoir la demande de paramétrage,
- générer l'étiquette d'entité, la génération comprenant la fourniture de l'identification d'utilisateur dans le serveur (2a, 2b, 2c, 2d) et l'inclusion de l'identification d'utilisateur dans l'étiquette d'entité,
- générer la réponse à la demande de paramétrage, la réponse comprenant l'étiquette d'entité fournie dans un champ d'étiquette d'entité de la réponse, l'attribution de l'identification d'utilisateur comprenant en outre la génération de l'identification d'utilisateur en réponse à la réception de données d'entrée d'utilisateur indiquant des informations personnelles ou les informations d'identité d'utilisateur.
